## Europäisches Patentamt
## European Patent Office
## Office européen des brevets

(19)

(11) Veröffentlichungsnummer: **0 091 573**

**B1**

(12)

# EUROPÄISCHE PATENTSCHRIFT

(45) Veröffentlichungstag der Patentschrift:
20.05.87

(51) Int. Cl.⁴: **G 02 C 5/22**

(21) Anmeldenummer: **83102741.2**

(22) Anmeldetag. **19.03.83**

(54) **Federscharnier für Brillen.**

(30) Priorität: **08.04.82 DE 3213174**
**10.12.82 DE 3245797**

(43) Veröffentlichungstag der Anmeldung:
**19.10.83 Patentblatt 83/42**

(45) Bekanntmachung des Hinweises auf die Patenterteilung:
**20.05.87 Patentblatt 87/21**

(84) Benannte Vertragsstaaten:
**AT CH DE FR IT LI**

(56) Entgegenhaltungen:
**DE-A-2 039 455**
**DE-A-2 242 044**
**DE-A-2 818 049**
**DE-A-2 940 055**
**FR-A-2 161 470**
**FR-A-2 424 558**
**FR-A-2 466 788**

**Die Akte enthält technische Angaben, die nach
dem Eingang der Anmeldung eingereicht wurden
und die nicht in dieser Patentschrift enthalten sind.**

(73) Patentinhaber: **OBE- Werk Ohnmacht &
Baumgärtner GmbH & Co. KG, Turnstrasse 20,
D-7536 Ispringen (DE)**

(72) Erfinder: **Drlik, Günther, Adolf- Sautter- Strasse 3,
D-7530 Pforzheim 8 (DE)**

(74) Vertreter: **Hubbuch, Helmut, Dipl.- Ing,
Patentanwälte Dr. Rudolf Bauer Dipl.- Ing.
Helmut Hubbuch Dipl.- Phys. Ulrich Twelmeier
Westliche Karl- Friedrich- Strasse 29- 31, D-7530
Pforzheim (DE)**

LIBER STOCKHOLM 1987

## Beschreibung

Die Erfindung betrifft ein Federscharnier für Brillen nach dem Oberbegriff von Anspruch

Es sind Federscharniere für Brillen bekannt, deren bügelseitige Hälfte zum einen Teil fest mit dem Bügelende verbunden ist, während der andere Teil mit dem daran befestigten, an der Mittelteilscharnierhälfte angelenkten Bügelscharnierteil gegen die Kraft einer in einer Federaufnahme in der Bügelscharnierhälfte an einem Federanschlag liegenden Feder zum federnden Überdrücken der Brillenbügel über den Öffnungsanschlag hinaus in Längsrichtung ausziehbar ist, wobei der fest verbundene Scharnierteil zur Führung und Halterung des ausziehbaren Scharnierteils dient.

So kennt man nach der DE-A-29 40 055 ein Federscharnier für Brillen bestehend aus einem Bügelteil mit Aufnahme für einen Schieberteil mit Bügelscharnierteil, welche Aufnahme den Schieberteil gegen Federwirkung ausfahrbar hält, wobei das Bügelscharnierteil mit einem Mittelteilscharnier zusammenwirkt und die Schieberaufnahme aus einem Hohlteil besteht, in welchem der Schieberteil als Schieberzunge läuft, die eine Schlitzung aufweist, in welcher die Rückholfeder gegen einen eingebrachten, zur Montage im Hohlteil und in der Schieberzunge verschiebbaren und in einer Ausnehmung im Hohlteil verrastbaren Federanschlag eingelegt ist.

Während sich diese DE-A-schrift auf eine Scharnierausbildung für Brillen mit zwei Bügelscharnierteilen bezieht mit einem Mittelteilscharnier, ist es Aufgabe der Erfindung eine solche Federscharnierausbildung mit nur einem Bügelscharnierteil zu schaffen.

Zur Lösung dieser Aufgabe kennzeichnet sich das Federscharnier für Brillen nach dem Oberbegriff des Anspruch 1 dadurch, daß das Bügelscharnierteil ein mittleres Bügelscharnierauge ist, welche mit beidseitigen Mittelteilscharnieraugen zusammenwirkt, daß die Schlitzung der Schieberzunge als Langloch ausgebildet ist, welches als Federanschlag eine Hülse führt, die mittels Montagestift durch ein Montagetunnel zugänglich, gegen die Wirkung der Feder verschiebbar und mittels eines darin geführten Anschlagteils verrastbar ist, und daß das Montagetunnel in der. Schieberzung mit seinem scharnierseitigem Ende unter dem mittleren Bügelscharnierauge angeordnet ist.

Weitere Einzelheiten der Federscharnierausbildung gemäß der Erfindung, insbes. auch bezüglich der Federverriegelung sowie des Spielausgleichs und der Erreichung eines Schnappeffekts zur Ruhe- bzw. Offenstellung hin, sind sodann an Hand der Zeichnung von bevorzugten Ausführungsbeispielen dargestellt und zwar zeigen:

Figur 1 bis 3 den Längsschnitt, die Draufsicht teilweise aufgeschnitten und den Querschnitt nach Linie III-III der Figur 1 einer Federscharnierausführung,

Figur 4 bis 6 den Längsschnitt, die Draufsicht teilweise aufgeschnitten und den Querschnitt nach Linie IV-IV der Figur 4 einer weiteren Ausführung.

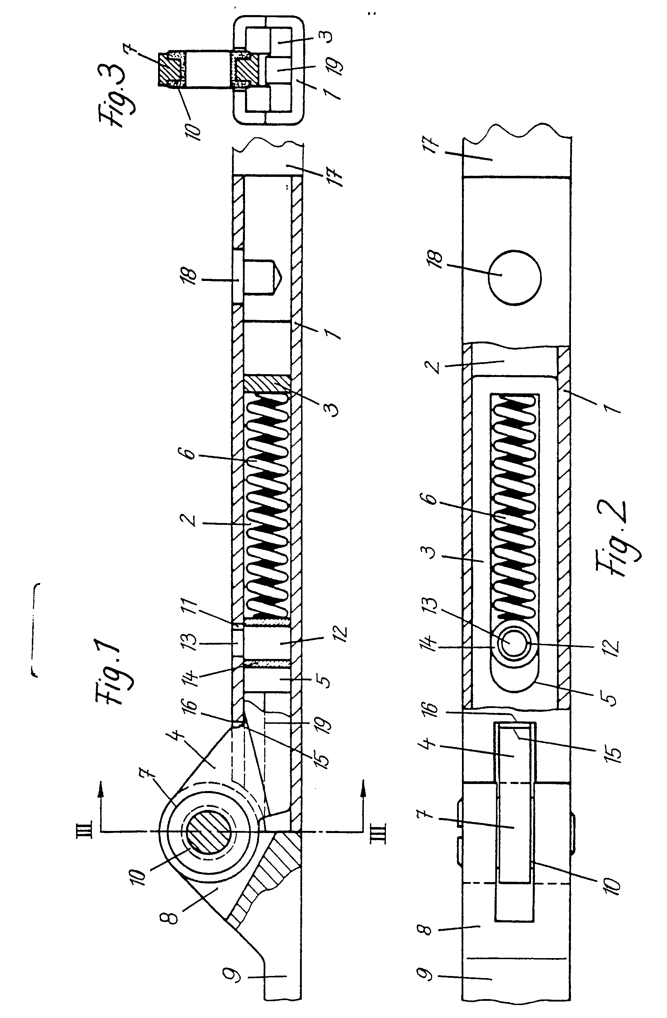

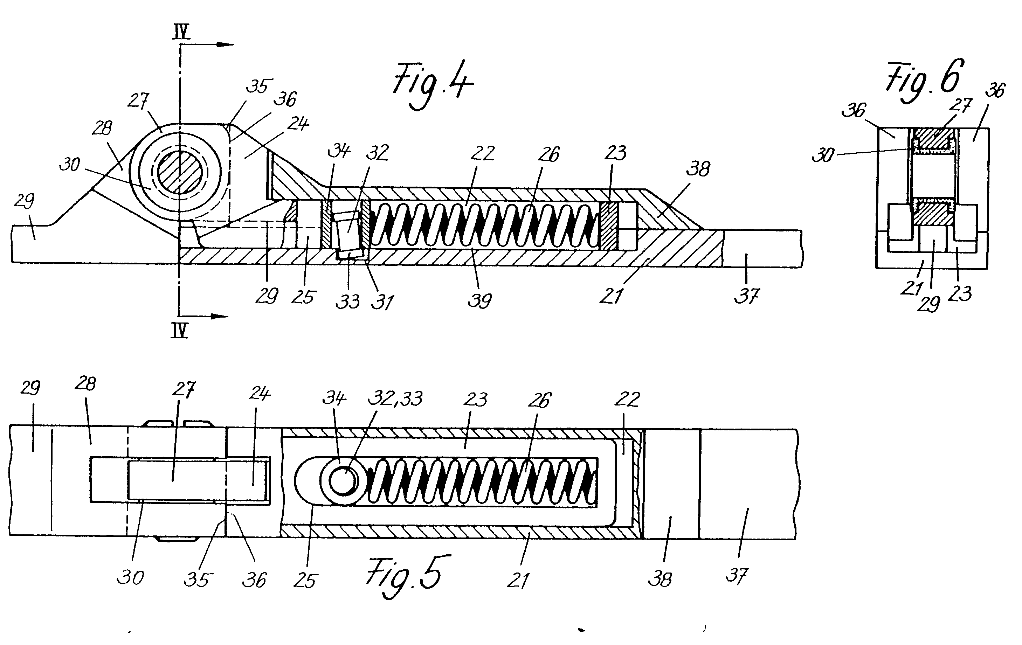

Nach dem ersten Ausführungsbeispiel entsprechend Figur 1 bis 3 besteht das Federscharnier aus dem Bügelteil in Form eines flachen Rohrstücks 1 mit Aufnahme 2 für den Schieberteil in Form einer Schieberzunge 3 mit Bügelscharnier 4. Hierbei läuft die Schieberzunge 3 im Rohrstück 1 und weist ein Langloch 5 für die Rückholfeder 6 auf. Die Schieberzunge 3 greift mittels Scharnierauge 7 zwischen zwei außenliegende Scharnieraugen 8 vom Mittelteilscharnier 9, wobei das mittlere Scharnierauge 7 mit einer Gangregulierhülse 10 ausgestattet ist.

Hier besteht der in die Schieberzunge 3 reichende Federanschlag aus einem in eine Öffnung 11 am Rohrstück einsetzbaren Bolzen 12 mit Ringansatz 13 im Bereich der Öffnung 11 zur Verriegelung bei Federanlage 6. Der Bolzen 12 ist im Bereich der Schieberzunge 3 von einer Hülse 14 umgeben, welche der Breite des Langlochs 5 entspricht.

Wie weiter aus Figur 1 hervorgeht, weist die Schieberzunge 3 beim Übergang zum Scharnierauge 7 eine Schrägung 15 auf zur Anlage am Austritt 16 an der Schieberaufnahme 2, welche (15) dem Spielausgleich unter Federwirkung 6 dient. Das die Aufnahme 2 bildende Rohrstück 1 dient am freien Ende zum Befestigen des Bügels 17 durch Verschraubung oder Vernietung bei 18.

Nach dem zweiten Ausführungsbeispiel entsprechend Figur 4 bis 6 besteht das Federscharnier aus dem Bügelteil in Form eines flachen Rohrstücks 21 mit Aufnahme 22 für den Schieberteil in Form einer Schieberzunge 23 mit Bügelscharnier 24. Hierbei läuft die Schieberzunge 23 im Rohrstück 21 und weist ein Langloch 25 für die Rückholfeder 26 auf entsprechend dem ersten Ausführungsbeispiel. Die Schieberzunge 23 greift mittels Scharnierauge 27 zwischen zwei außenliegende Scharnieraugen 28 vom Mittelteilscharnier 29, wobei das mittlere Scharnierauge 27 mit einer Gangregulierhülse 30 ausgestattet ist.

Hier besteht der in die Scharnierzunge 23 reichende Federanschlag aus einer in eine Ausnehmung 31 am Rohrstück 21 reichenden Rolle 32 mit Ringabsatz 33 im Bereich der Ausnehmung 31 zur Verriegelung bei Federanlage 26. Die Rolle 32 ist im Bereich der Schieberzunge 23 von einer Hülse 34 umgeben, welche der Breite des Langlochs 25 entspricht.

Wie weiter aus Figur 4 hervorgeht, weisen die Scharnieraugen 28 vom Mittelteilscharnier 29 Nocken 35 auf zur Anlage am Ende 36 der Schieberaufnahme 22, welche (35) der Erzielung eines Schnappeffekts beim Übergang in die Ruhe- bzw. Offenstellung dienen. Hier ist im übrigen das die Aufnahme 22 bildende Rohrstück 21 aus einem auf das Bügelende 37 aufgesetzte U-Stück 38 zusammen mit einer entsprechenden Einlassung 39 im Bügelende 37 gebildet.

Bei beiden Ausführungsbeispielen erfolgt die Montage durch Eindrücken der Hülse 14 bzw. 34 gegen Wirkung der Feder 6 bzw. 26 mittels Montagestift durch das Tunnel 19 bzw. 29 bis der Bolzen 12 durch die Öffnung 11 eingeführt werden kann bzw. die Rolle 32 in die Ausnehmung 31 einfällt.

**Patentansprüche**

1. Federscharnier für Brillen bestehend aus einem Bügelteil mit Aufnahme für einen Schieberteil mit Bügelscharnierteil, welche Aufnahme den Schieberteil gegen Federwirkung ausfahrbar hält, wobei das Bügelscharnierteil mit einem Mittelteilscharnierteil zusammenwirkt und die Schieberaufnahme aus einem Hohlteil besteht, in welchem der Schieberteil als Schieberzunge läuft, die eine Schlitzung aufweist, in welcher die Rückholfeder gegen einen eingebrachten, zur Montage im Hohlteil und in der Schieberzunge verschiebbaren und in einer Ausnehmung im Hohlteil verrastbaren Federanschlag eingelegt ist, dadurch gekennzeichnet, daß das Bügelscharnierteil ein mittleres Bügelscharnierauge (7, 27) ist, welches mit beidseitigen Mittelteilscharniraugen zusammenwirkt, daß die Schlitzung der Schieberzunge (3, 23) als Langloch (5, 25) ausgebildet ist, welches (5, 25) als Federanschlag eine Hülse (14, 34) führt, die mittels Montagestift durch einen Montagetunnel (19, 29) zugänglich, gegen die Wirkung der Feder (6, 26) verschiebbar und mittels eines darin geführten Anschlagteils (12, 32) verrastbar ist, und daß das Montagetunnel (19, 20) in der Schieberzunge (3, 23) mit seinem scharnierseitigen Ende unter dem mittleren Bügelscharnierauge (7, 27) angeordnet ist.

2. Federscharnier nach Anspruch 1, dadadurch gekennzeichnet, daß der in die Schieberzunge (3) reichende Federanschlag einen in eine Öffnung (11) der Aufnahme (2) einsetzbaren Bolzen (12) mit Ringansatz (13) im Bereich der Öffnung (11) zur Verriegelung bei Federanlage aufweist, welcher Bolzen (12) im Bereich der Schieberzunge (3) von der Hülse (14) umgeben ist, deren Durchmesser der Breite des Langlochs (5) entspricht.

3. Federscharnier nach Anspruch 1, dadurch gekennzeichnet, daß der in die Schieberzunge (23) reichende Federanschlag eine in die Ausnehmung (31) der Aufnahme (22) reichende Rolle (32) mit Ringabsatz (33) im Bereich der Ausnehmung (31) zur Verriegelung bei Federanlage aufweist, welche Rolle (32) im Bereich der Schieberzunge (23) von der Hülse (34) umgeben ist, wobei der Durchmesser der Hülse (34) der Breite des Langlochs (25) entspricht.

4. Federscharnier nach einem der Ansprüche 1 bis 3, dadurch gekennzeichnet, daß die Schieberzunge (3) beim Übergang zum Scharnierauge (7) eine Schrägung (15) zur Anlage am Austritt (16) aus der Schieberaufnahme (2) aufweist, welche als Spielausgleich unter Federwirkung dient.

5. Federscharnier nach einem der Ansprüche 1 bis 4, dadurch gekennzeichnet, daß die Scharnieraugen (28) des Mittelteilscharniers (29) zur Anlage am Schieberaufnahmeende (22, 36) nockenartig (35) unrund ausgebildet sind zur Erzielung eines Schnappeffekts beim Übergang in die Ruhe- bzw. Offenstellung.

6. Federscharnier nach einem der vorhergehenden Ansprüche, dadurch gekennzeichnet, daß das die Aufnahme (2) bildende Rohrstück (1) am freien Ende zum Befestigen (Vernietung 18) des Bügels (17) dient.

7. Federscharnier nach einem der vorhergehenden Ansprüche, dadurch gekennzeichnet, daß das die Aufnahme (22) bildende Rohrstück (21) aus einem auf das Bügelende (37) aufgesetztem U-Stück (38) zusammen mit dem Bügelende (37) gebildet ist.

8. Federscharnier nach einem der vorhergehenden Ansprüche, dadurch gekennzeichnet, daß das die Aufnahme bildende Rohrstück in eine äußere Ausnehmung eines Kunststoffbügels einsetzbar ist.

9. Federscharnier nach Anspruch 8, dadurch gekennzeichnet, daß das zugehörige Mittelteilscharnier eine Außenplatte mit in den Brillenbacken reichenden Stutzen mit Innengewinde besitzt, in welchen von innen eine Verbindungsschraube zur Scharnierbefestigung reicht.

**Claims**

1. A spring hinge for eyeglasses, comprising a bow-side hinge member having a receptacle for a slider provided with a bow-side hinge part, wherein the slider is held in the receptacle to be extensible against spring action, the bow-side hinge part cooperates with a rim-side hinge part, the receptacle for the slider consists of a hollow member, in which the slider is slidable, the slider consists of a slider tongue, which has a slot, which contains the return spring, which bears on an inserted spring abutment, which for the assembling operation is displaceable in the hollow member and in the slider tongue and which is adapted to be yieldably locked in an opening of the hollow member, characterized in that the bow-side hinge part consists of an intermediate bowside hinge eye (7, 27), which cooperates with rim-side hinge eyes disposed on opposite sides, the slot in the slider tongue (3, 23) consists of an elongate hole (5, 25), in which a spring abutment is guided, which consists of a sleeve (14, 34), which is accessible through an access tunnel (19, 29) by means of an assembling pin and is displaceable against the action of the spring (6, 26) and adapted to be yieldably locked by means of a stop member (12, 32) guided therein, and the hinge-side end of the access tunnel (19, 20) in the slider tongue (3, 23) is disposed under the intermediate bow-side hinge eye (7, 27).

2. A spring hinge according to claim 1, characterized in that the spring abutment extends into the slider tongue (3) and comprises a pin (12), which is adapted to be inserted into an opening (11) of the receptacle and adjacent to the opening (11) has an annular extension (13) for effecting an interlock when engaged by the spring, said pin (12) is surrounded by the sleeve (14) adjacent to the slider tongue (3) and the diameter of the sleeve corresponds to the width of the elongate hole (5).

3. A spring hinge according to claim 1, characterized in that the spring stop extends into the slider tongue (23) and comprises a roller (32), which extends into the opening (31) of the receptacle (22) and adjacent to the opening (31) has an annular step (33) for effecting an interlock when engaged by the spring, said roller (32) is surrounded by the sleeve (34) adjacent to the slider tongue (23) and the diameter of the sleeve (34) corresponds to the width of the elongate hole (25).

4. A spring hinge according to any of claims 1 to 3, characterized in that the slider tongue (3) has at the transition to the hinge eye (7) a chamfer (15) for contacting the outlet (16) of the receptacle (2) for the slider and said chamfer serves to compensate a play under spring action.

5. A spring hinge according to any of claims 1 to 4, characterized in that the hinge eyes (28) of the rim-side hinge part (29) have the shape of non-circular cams (35) for engaging the end (22, 36) of the receptacle for the slider so that a snap action will be obtained during a change to the position of rest and to the open position.

6. A spring hinge according to any of the preceding claims, characterized in that the tubular member (1) which constitutes the receptacle (2) serves at its free end for the fixation (rivet 18) of the bow (17).

7. A spring hinge according to any of the preceding claims, characterized in that the tubular member (21) which constitutes the receptacle (22) consists of a member which is mounted on the bow end (37) and which together with the bow end (37) is U-shaped.

8. A spring hinge according to any of the preceding claims, characterized in that the tubular member which constitutes the receptacle is adapted to be inserted into an external opening of a U-shaped plastic member.

9. A spring hinge according to claim 8, characterized in that the associated rim-side hinge member comprises an outer plate, which is provided with a tubular extension, which extends into the rim of the eyeglasses and has internal screw threads, and a connecting screw for securing the hinge extends into said tubular extension from the inside.

## Revendications

1. Charnière à ressort pour lunettes comprenant un élément branche avec un logement pour un élément coulisse avec charnière de branche, ce logement permettant le déplacement de l'élément coulisse en fonction de l'effet du ressort, l'élément charnière de branche agissant ensemble avec un élément charnière de front et le logement de la coulisse consistant en un élément creux, dans lequel l'élément coulisse se déplace comme languette coulissante munie d'une fente dans laquelle est logé le ressort de rappel en antagonisme avec une butée de ressort déplaçable dans la languette coulissante pour le montage et crantable dans un évidement de l'élément creux, caractérisée par le fait que l'élément charnière de branche est un oeil médian de charnière de branche (7, 27) agissant avec les deux yeux de charnière du front, que la fente de la languette coulissante (3, 23) est conçue comme trou oblong (5, 25) qui, en tant que butée de ressort, guide une douille (14, 34) accessible avec une pointe de montage à travers un tunnel de montage (19, 29), déplaçable en antagonisme à l'effet du ressort (6, 26) et crantable moyennant un élément de butée (12, 32) y inséré et que le tunnel de montage (19, 20) est logé avec son extrémité côté charnière dans la languette coulissante (3, 23) en dessous de l'oeil médian de la charnière de branche (7, 27).

2. Charnière à ressort selon revendication 1, caractérisée par le fait que la butée de ressort portant dans la languette coulissante (3) est munie d'un boulon (12), insérable dans une ouverture (11) du logement (2), avec un talon circulaire (13) dans la zone de l'ouverture (11) pour le verrouillage à l'approche du ressort, le boulon (12) étant entouré dans la zone de la languette coulissante (3) par la douille (14) dont le diamètre correspond à la largeur du trou oblong (5).

3. Charnière à ressort selon la revendication 1, caractérisée par le fait que la butée de ressort portant dans la languette coulissante (23) est munie d'un rouleau (32) portant dans l'évidement (31) du logement (22) avec un talon circulaire (33) dans la zone de l'évidement (31) pour le verrouillage à l'approche du ressort, le rouleau (32) étant entouré par la douille (34) dans la zone de la languette coulissante (23), le diamètre de la douille (34) correspondant à la largeur du trou oblong (25).

4. Charnière à ressort selon les revendications 1 à 3, caractérisée par le fait que la languette coulissante (3) est munie, à la transition vers l'oeil de charnière (7) d'un biais (15) pour la portée à la sortie (16) du logement du coulisseau (2) servant à compenser le jeu sous l'effet du ressort.

5. Charnière à ressort selon l'une des revendications 1 à 4, caractérisée par le fait que les yeux de charnières (28) de la charnière de la partie médiane (29) pour la pose sur l'extrémité du logement du coulisseau (22, 36) sont en forme de came (35) et en faux-rond, afin d'obtenir un effet de déclic à la transition dans la position de repos ou la position d'ouverture.

6. Charnière à ressort selon l'une des revendications précédentes, caractérisée par le fait que l'extrémité libre de la pièce tubulaire (1) servant de logement (2) sert à la fixation (rivetage 18) de la branche (17).

7. Charnière à ressort selon l'une des revendications précédentes, caractérisée par le fait que la pièce tubulaire (21) formant le logement (22) est formée d'une pièce en U (38) montée sur l'extrémité de la branche (37) avec l'extrémité (37) de la branche.

8. Charnière à ressort selon l'une des revendications précédentes, caractérisée par le fait que la pièce tubulaire formant le logement peut être insérée dans un évidement extérieur d'une branche plastique.

9. Charnière à ressort selon la revendication 8, caractérisée par le fait que la charnière de la partie médiane comprend une plaque extérieure avec des manchons portant dans la joue des lunettes avec filet femelle dans lequel porte une vis de jonction pour la fixation de la charnière.

III

*Fig.1*

10  8  9  7  4  16  14  13  11  2  6  18

15  19  5  12  3  1  17

III

*Fig.3*

7  10

1  19  3

0 091 573

9  8  7  4  16  14  13  3  6  2  18  17

10  15  5  12  1

*Fig.2*

Fig. 6

Fig. 4

Fig. 5

3